# EUROPÄISCHE PATENTSCHRIFT

(11) **EP 1 821 498 B1**
(45) Veröffentlichungstag und Bekanntmachung des Hinweises auf die Patenterteilung: **21.05.2008**
(21) Anmeldenummer: 06003030.1
(22) Anmeldetag: 15.02.2006
(51) Int. Cl.: H04L 29/08

(54) **Ausfallsicheres System zum Verwalten von Client-Server-Kommunikation**
Fail safe system for managing client-server communication
Système à sécurité intégrée destiné à la gestion de la communication client-serveur

(43) Veröffentlichungstag der Anmeldung: 22.08.2007
(73) Patentinhaber: SOFTWARE AG, 64297 Darmstadt (DE)
(72) Erfinder: Bein, Kerstin, 67227 Frankenthal (DE); Schmidt, Wolfgang, 64673 Zwingenberg (DE)
(74) Vertreter: Heselberger, Johannes

(56) Entgegenhaltungen:
- EP-A- 0 549 325
- US-A- 5 815 668
- US-A- 6 065 062
- US-A1- 2005 172 161
- US-B1- 6 578 160
- "REPLICATION AND RECOVERY OF DATABASE STATE INFORMATION IN FAULT TOLERANT CLUSTERS" IBM TECHNICAL DISCLOSURE BULLETIN, IBM CORP. NEW YORK, US, Bd. 36, Nr. 10, 1. Oktober 1993 (1993-10-01), Seiten 541-544, XP000412479 ISSN: 0018-8689

## Beschreibung

### 1. Technischer Bereich

Die vorliegende Erfindung betrifft ein ausfallsicheres System zum Verwalten von Client-Server-Kommunikation.

### 2. Der Stand der Technik

Client-Server-Netzwerke sind heutzutage allgegenwärtig in der Datenverarbeitung. Als ein Client wird dabei jede Art von Teilnehmer an dem Netzwerk betrachtet, der eine Anfrage nach einem Dienst stellt, der im Netzwerk bereitgestellt wird. Ein Server ist ein Teilnehmer eines Netzwerks, der einen Dienst für Clients im Netzwerk bereitstellt. Beispielsweise kann es sich bei einem Client um ein Anwendungsprogramm handeln, das Daten von einem Server in Form einer Datenbank anfordert.

Die Verwaltung der Kommunikation zwischen einer Vielzahl von Clients und Servern gestaltet sich insbesondere dann schwierig, wenn die Teilnehmer des Netzwerks heterogen sind, d.h. unterschiedliche Software und / oder Hardware verwenden. Beispielsweise gibt es eine Vielzahl von unterschiedlichen Betriebssystemen und Netzwerkprotokollen, die von den Clients und / oder den Servern eines Netzwerks verwendet werden können. Auch auf Seiten der Hardware sind Variationen sowohl bei den Clients, als auch bei den Servern und der Netzwerkarchitektur denkbar.

Zur Überwindung dieser Schwierigkeiten ist es aus dem Stand der Technik bekannt, die Kommunikation zwischen dem / den Client(s) und dem / den Server(n) eines Netzwerks mit Hilfe eines Servicemaklers bzw. Brokers zu verwalten, so wie er in der EP 0 600 235 B1 der Anmelderin offenbart ist. Fig. 1 zeigt schematisch die aus der EP 0 600 235 B1 bekannte Anordnung des Brokers 20 in einem heterogenen Netzwerk aus Clients 10a-d und Servern 12a - d.

Da der Broker für die Kommunikation zwischen den verschiedenen Teilnehmern des Netzwerks von zentraler Bedeutung ist, kann sein Ausfall zu einem unerwünschten Datenverlust führen. Es ist daher erforderlich, einen Mechanismus bereitzustellen, mit dem ein Datenverlust verhindert oder zumindest minimiert werden kann.

Aus dem Stand der Technik bekannte Systeme, wie beispielsweise ein RAID-System ermöglichen eine ausfallsichere Speicherung von dauerhaft (auf einer Festplatte o.ä.) gespeicherten Daten. Daten, die sich in einem flüchtigen Speicher befinden, d.h. dem typischen Hauptspeicher eines Computersystems, gehen jedoch bei einem Absturz des Systems unwiederbringlich verloren. Die oben erläuterte Funktion des Brokers bringt es mit sich, dass wesentliche Bestandteile der Kommunikation zwischen den Clients und den Servern des Netzwerks im flüchtigen Speicher, dem so genannten Memory Pool des Brokers, abgewickelt werden. Eine Sicherung der dauerhaft gespeicherten Daten des Brokers kann daher allenfalls teilweise das Problem der Ausfallsicherheit lösen.

Großrechner der Firma IBM bieten zu diesem Zweck den "Parallel SYSPLEX Support" an. Privilegierte Anwenderprogramme können hierbei XES (die "Cross System Extended Services") benutzen, um "Common Storage", der von verschiedenen MVS-Systemen gemeinsam verwendet werden kann, zu verwalten. Dieser gemeinsame Speicher wird über das "Cross-Coupling Facility (XCF)" zur Verfügung gestellt. Somit kann bei Ausfall einer Komponente auf einem LPAR ("Logical Partition") die Komponente auf einem anderen LPAR den Weiterbetrieb der Anwendung sicherstellen.

Schließlich ist aus der US 2005/0172161 A1 eine Verringerung des Datenverlusts beim Ausfall einer "primary node" bekannt, indem eine "secondary node" bereitgestellt wird. Bei einem Ausfall der "primary node", der durch das Ausbleiben eines Bereitschaftssignals detektiert wird, wird eine virtuelle IP-Adresse, die zunächst auf die "primary node" zeigt, auf die "secondary node" umgeleitet und die Stromversorgung zur "primary node" sofort unterbrochen um Inkonsistenzen in der weiteren Datenverarbeitung zu vermeiden. Gleichzeitig erhält die "secondary node" Zugriff auf eine Partition eines zunächst von der "primary node" verwendeten, dauerhaften Speichers. Ein Verlust der im flüchtigen Speicher befindlichen Daten kann jedoch mit dem aus der US 2005/0172161 A1 bekannten System allenfalls teilweise erreicht werden.

Aus der US 6,578,160 B1 ist ein Protokollmechanismus für Transaktionen bekannt, bei dem Protokolle gespiegelt werden, um beim Ausfall einer Systemressource einer Wiederherstellung eines Vorgangs zu ermöglichen.

Der vorliegenden Erfindung liegt daher das Problem zugrunde, ein ausfallsicheres System zum Verwalten von Client-Server-Kommunikation bereitzustellen, so dass auch die in einem flüchtigen Speicher eines Brokers gespeicherten Daten zur Kommunikation zwischen den Clients und den Servern bei einem Ausfall des Brokers im Wesentlichen nicht verloren gehen.

### 3. Zusammenfassung der Erfindung

Dieses Problem wird gelöst durch ein System nach Anspruch 1.

Während somit der primäre Broker die Kommunikation zwischen den Clients und den Servern abwickelt und dabei beispielsweise alle Anfragen von Teilnehmern bearbeitet, werden durch die Erzeugung der Einträge des Journals und die Versendung an den Backup-Broker alle relevanten Vorgänge dort gespiegelt. Bei einem Ausfall des primären Brokers ist der Backup-Broker aufgrund der wesentlichen Übereinstimmung der beiden flüchtigen Speicher in der Lage, unterbrechungsfrei die Bearbeitung aller Anfragen zu übernehmen, unabhängig davon, ob die damit zusammenhängenden Daten dauerhaft oder nur flüchtig gespeichert sind.

Vorzugsweise weist der primäre Broker eine Filterfunktion auf, die festlegt, welche Einträge in das Journal geschrieben werden. Dementsprechend protokolliert das Journal nicht jedes modifizierte Byte, sondern hält vorzugsweise in einer möglichst kompakten Weise alle relevanten Änderungen der Objekte im flüchtigen Speicher des primären Brokers fest.

Der Backup-Broker weist ferner vorzugsweise einen Journal-Interpreter auf, der die vom primären Broker empfangenen Einträge abarbeitet, damit der Zustand des zweiten flüchtigen Speichers im Wesentlichen identisch ist mit dem Zustand des ersten flüchtigen Speichers. Dabei bringt die Abarbeitung der Einträge in dem Journal durch den Journal-Interpreter des Backup-Brokers den zweiten flüchtigen Speicher vorzugsweise durch zumindest einen anderen Schritt in den zum ersten flüchtigen Speicher im Wesentlichen identischen Zustand, als den / die dafür im primären Broker durchgeführten Schritt(e). Im Ergebnis wird dadurch im Backup-Broker der Aufwand zur Abarbeitung der Einträge verringert, da der zweite flüchtige Speicher direkt in den Zustand des ersten flüchtige Speichers gebracht wird, ohne einen oder mehrere Zwischenschritte, die dazu möglicherweise im ersten flüchtigen Speicher des primären Brokers durchgeführt worden sind.

Vorzugsweise teilt der primäre Broker in einer Antwort auf den Empfang einer Kommunikation von einem Client oder einem Servers dem Client bzw. dem Server eine Identifizierung des Backup-Brokers mit. Besonders bevorzugt ist es, wenn jede Antwort auf die Anfrage eines Clients die Identifizierung des Backup-Brokers aufweist. Eine fehlgeschlagene Anfrage an den primären Broker kann daher unmittelbar erneut an den Backup-Broker versandt werden, beispielsweise durch entsprechende Anweisungen an die Schnittstelle des entsprechenden Anwenderprogramms.

Der primäre Broker beantwortet eine Kommunikation mit dem zumindest einen Client und oder dem zumindest einen Server, die zu einem Eintrag in dem Journal führt, erst nachdem der Backup-Broker den Empfang des entsprechenden Eintrags quittiert hat. Damit wird sichergestellt, dass jeder relevante Vorgang im primären Broker zunächst für einen Ausfall gesichert wird, bevor die Verarbeitung fortgesetzt wird. Der Backup-Broker kann daher, falls erforderlich, sofort die Bearbeitung dort fortsetzen, wo der primäre Broker ausgefallen ist.

Um Inkonsistenzen zu vermeiden wird vorzugsweise jede Kommunikation mit dem primären Broker, die zu einem Eintrag im Journal führt, eindeutig identifiziert. Bevorzugt wird dabei jede Anfrage eines Teilnehmers an den Broker, die zu einem Eintrag in das Journal führt, fortlaufend nummeriert, so dass beispielsweise das doppelte Senden einer Nachricht im Backup-Broker entdeckt und unterbunden werden kann.

Im Einsatz schickt der Backup-Broker bevorzugt ein Testsignal an den primären Broker, wenn er über einen vorbestimmten Zeitraum hinweg keinen neuen Eintrag empfangen hat. Anders als im oben erläuterten Stand der Technik wird das Netzwerk nicht durch das ständige Übertragen eines Bereitschaftssignals zusätzlich belastet, sondern ein solcher Test wird erst dann verwendet, wenn der Backup-Broker über einen vorbestimmten Zeitraum hinweg keinen zusätzlichen Eintrag aus dem Journal erhält.

Weitere Ausgestaltungen des erfindungsgemäßen Systems sind in weiteren abhängigen Patentansprüchen definiert.

Schließlich betrifft die vorliegende Erfindung ein computerlesbares Medium mit Anweisungen zur Bereitstellung des vorangehend erläuterten Systems sowie ein Programm mit Anweisungen zur Bereitstellung dieses Systems. Das erfindungsgemäße System kann somit einerseits durch eine dedizierte Hardware verwirklicht werden oder durch eine entsprechende Software, die über einen Datenträger oder aus dem Internet geladen und auf einer beliebigen Hardware- und Softwareplattfonn installiert werden kann, die damit die oben definierten Eigenschaften des beanspruchten Systems annimmt.

### 4. Kurze Beschreibung der Figuren

In der nachfolgenden detaillierten Beschreibung werden gegenwärtig bevorzugte Ausführungsbeispiele der Erfindung näher erläutert unter Bezugnahme auf die begleitenden Figuren. Diese Figuren zeigen:
- Fig. 1:: Die Anordnung eines einzelnen Brokers nach dem Stand der Technik;
- Fig. 2:: Eine schematische Darstellung eines Ausführungsbeispiels der vorliegenden Erfindung;
- Fig. 3:: Eine schematische Darstellung der beiden Broker und ihrer flüchtigen und dauerhaften Speicher im Ausführungsbeispiel aus Fig. 2;
- Fig. 4:: Ein Ausführungsbeispiel einer Anordnung eines ersten und eines zweiten Brokers auf einem Großrechner;
- Fig. 5:: Eine schematische Darstellung der Schritte zur Sicherung des flüchtigen Speichers des primären Brokers; und
- Fig. 6:: Eine schematische Darstellung der Schritte bei der Übernahme der Verwaltungsfunktion durch den Backup-Broker.

### 5. Detaillierte Beschreibung von bevorzugten Ausführungsbeispielen

Ein Broker dient der Verwaltung der Kommunikation unter Clients und Servern eines Netzwerks. Fig. l, die im Wesentlichen der EP 0 600 235 B1 entnommen ist, zeigt schematisch die Anordnung eines Brokers 20 in einem Netzwerk aus einer Vielzahl von Clients 10a - 10d und Servern 12a - 12d. Die Details der Kommunikation zwischen den Clients, den Servern und dem Broker, insbesondere die nachfolgend erwähnten Befehle und Attribute, die im Rahmen der Kommunikation verwendet werden, sind in der EP 0 600 235 B1 offenbart ebenso wie die zahlreichen Verwaltungsfunktionen des Brokers 20.

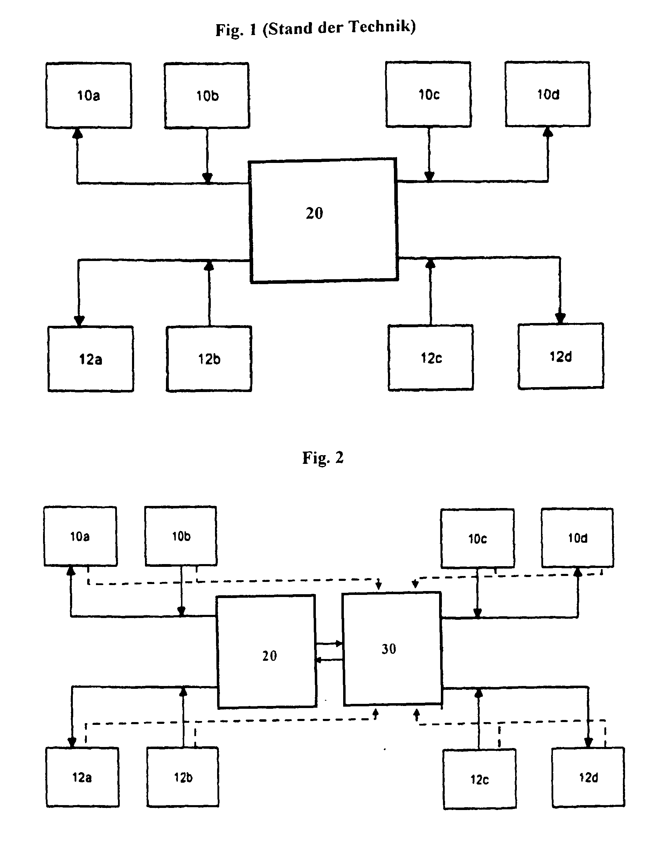

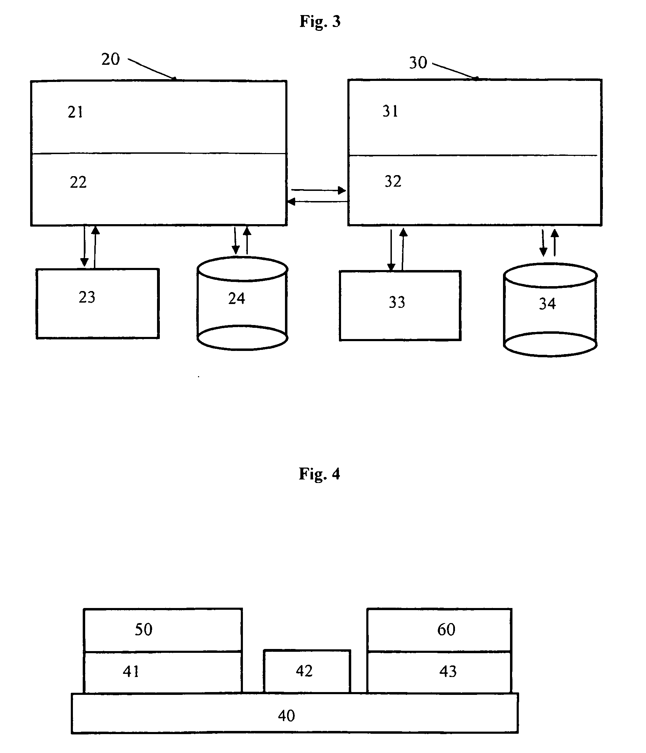

Es ist unmittelbar erkennbar, dass der Broker 20 in der gezeigten Anordnung für die Kommunikation zwischen den Clients 10a - d und den Servern 12a - 12d unverzichtbar ist. Selbst wenn der Inhalt eines dauerhaften Speichers (in Fig. 1 nicht dargestellt, vgl. aber die unten erläuterte Fig. 3, Bezugszeichen 24) des Brokers gegen Datenverlust gesichert wird, beispielsweise durch die Verwendung eines RAID-Systems oder ähnlicher Einrichtungen, gehen bei einem Absturz und dem nachfolgendem Neustart des Brokers 20 sämtliche Daten verloren, die nur im flüchtigen Speicher, dem so genannten Memory Pool 23 (vgl. Fig. 3) des Brokers 20 gespeichert sind. Für viele kritische Anwendungen, beispielsweise die Geschäftsprozesse einer Bank, ist weder ein temporärer Ausfall noch der Verlust von Daten akzeptabel.

Fig. 2 zeigt schematisch ein Ausführungsbeispiel der vorliegenden Erfindung. Wie man erkennen kann, ist parallel zum primären Broker 20 ein Backup-Broker 30 angeordnet. Bei einem Ausfall des primären Brokers 20 wird die weitere Kommunikation zwischen den Clients 10a - d und den Servern 12a - 12d über den Backup-Broker 30 verwaltet (vgl. gestrichelte Linien in Fig. 2).

Zusätzlich zu der im Folgenden beschriebenen Anordnung mit einem primären Broker und einem Backup-Broker ist es auch denkbar einen oder mehrere weitere Backup-Broker vorzusehen, um ein noch größeres Maß an Ausfallsicherheit bereitzustellen.

Vorzugsweise werden für den Betrieb des in Fig. 2 dargestellten Clusters aus primärem und Backup-Broker zwei Instanzen identischer Release- und Patch-Versionen des Brokers verwendet, die außerdem im Wesentlichen identisch konfiguriert sind, d.h. die Dimensionen für Kontrollblöcke, Nachrichten, und sonstige Daten, die in der EP 0 600 235 B1 im einzelnen definiert sind, müssen im Backup-Broker ebenso verfügbar sein wie im primären Broker. Andere Ressourcen wie Exits, die im primären Broker 20 benutzt werden, müssen auch im Backup-Broker 30 existieren; sie können aber andere Namen besitzen. Die Sicherheit für die Datenverwaltung wird bevorzugt über ein globales Sicherheitssystem (nicht dargestellt) abgewickelt. Die vom primärem 20 und vom Backup-Broker 30 verwendeten dauerhaften Speicher 24 bzw. 34 (vgl. Fig. 3) können jedoch unterschiedlich ausgebildet sein.

Die Attributdateien von primärem Broker 20 und Backup-Broker 30 sind mit Ausnahme folgender Attribute, die in der EP 0 600 235 B1 offenbart sind, vorzugsweise identisch:
BROKER-ID
NUM-WORKER
PSTORE-TYPE
TRACE-LEVEL
TRANSPORT

Auch alle transport-spezifischen Attribute können differieren. Für einen reibungslosen Betrieb von primärem und Backup-Broker sind die Dimensionen der beiden Memory Pools 23 und 33 und der beiden dauerhaften Speicher (persistent stores) 24 und 34 abzugleichen.

Wie in Fig. 2 durch die beiden Pfeile zwischen den beiden Brokern 20, 30 dargestellt kommunizieren die beide Broker vorzugsweise direkt miteinander, wobei zur Optimierung eine Datenkompression eingesetzt werden kann.

Fig. 3 zeigt ein Ausführungsbeispiel mit zwei vollständig getrennten Einrichtungen für den primären und den Backup-Broker. Dabei laufen die beiden Broker 20 und 30 auf separater Hardware, um ein Höchstmaß an Unabhängigkeit und damit Ausfallsicherheit des Gesamtsystems zu erreichen. Dazu weist jeder Broker 20, 30 einen eigenen Memory Pool 23, bzw. 33 auf sowie einen eigenen dauerhaften Speicher 24 bzw. 34, beispielsweise in Form einer Festplatte oder zumindest eines Teilbereichs davon. Ferner weist jeder Broker Kernel-Komponenten 21 bzw. 31 sowie Transport-Komponenten 22 bzw. 32 auf.

Alternativ ist auch eine Ausführungsform dankbar, wie sie in Fig. 4 schematisch dargestellt ist. Hier laufen auf einem Großrechner, beispielsweise einem IBM z900 Mainframe, zwei Instanzen des Brokers 50, 60. Die beiden Broker sind dazu auf zwei LPAR's (logische Partitionen) des Großrechners verteilt. Die Bezugszeichen 41, 43 kennzeichnen hier die jeweiligen z/OS-Betriebssysteme.

Eine heterogene Umgebung ist im Ausführungsbeispiel aus Fig. 3 denkbar, wenn beispielsweise der primäre Broker 20 und der Backup-Broker 30 auf Computersystemen mit unterschiedlicher Hardware und / oder unterschiedlichen Betriebssystemen (Windows^{®}, Unix, Linux, OS/2 etc.) installiert sind.

Um im Ausführungsbeispiel aus Fig. 3 den Inhalt des Memory Pools 23 bei einem Absturz zu sichern, führt der primäre Broker 20 ein Journal( nicht dargestellt).

Das Journal enthält alle objektbezogenen Aktivitäten aller Threads, die im Broker 20 zur Verwaltung der Kommunikation mit den Clients 10a-d und den Servern 12a - d (vgl. Fig. 2) verwendet werden. Das Journal enthält definierte Einträge, die beispielsweise für die Bearbeitung einer Anfrage eines Teilnehmers notwendig sind, oder für Abläufe wie das Löschen bestimmter Ressourcen des Brokers 20.

Im Falle einer Anfrage eines Teilnehmers werden diese Daten im Broker 20 gesammelt und vor einer Antwort an den Teilnehmer über die direkte Kommunikationsverbindung an den Backup-Broker weitergeleitet. Erst nach Erhalt einer Quittung vom Backup-Broker 30 an den primären Broker 20 wird die Antwort auf die Anfrage an den Teilnehmer gesendet.

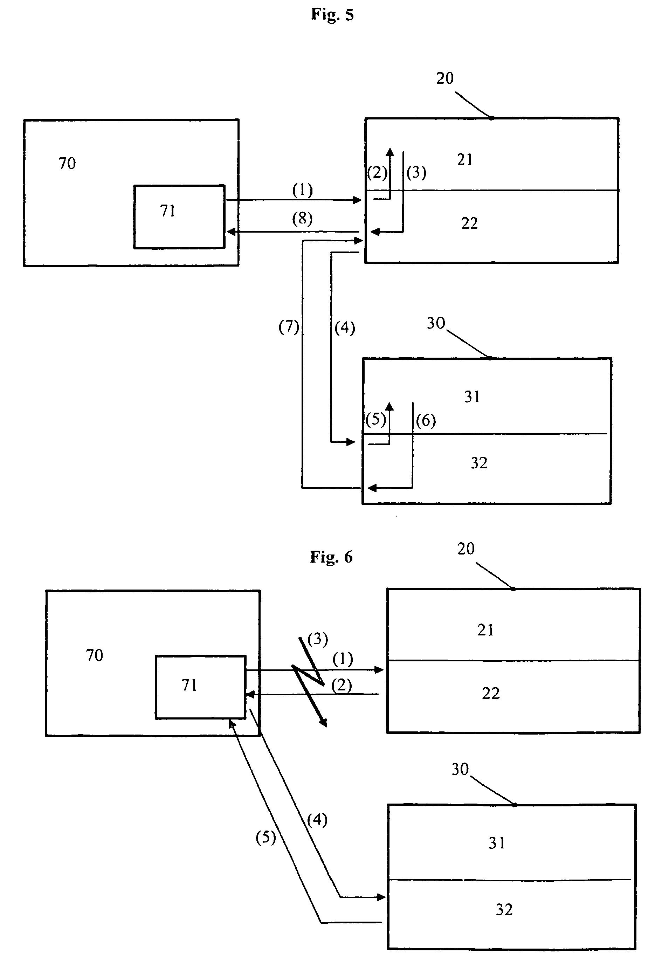

Dieser Vorgang ist im Detail in Fig. 5 dargestellt und umfasst die folgenden Schritte:
(1) Die Anfrage des Teilnehmers 70 (Client oder Server) wird über eine Schnittstelle 71, beispielsweise das in der EP 0 600 235 B1 erläuterte Stub, an den primären Broker 20 gesendet. Die Transportschicht der Schnittstelle wartet in diesem Beispiel synchron auf eine Antwort vom Broker 20, d.h. der Teilnehmer 70 hält seine eigene Prozessverarbeitung solange an, bis die Antwort vom Broker 20 eintrifft.
(2) Ebenso wie der Teilnehmer 70 weist der primäre Broker 20 Transportkomponenten 22 für die Kommunikation auf, die in den Figuren vereinfacht dargestellt sind und gemeinsam mit dem Bezugszeichen 22 bezeichnet sind. Der Broker 20 stellt neben den bisher üblichen Transportkomponenten, die als Server im Sinne der jeweiligen Transportprotokolle agieren, so genannte Forwarder zur Verfügung. Sie agieren im Sinne der jeweiligen Transportprotokolle als Clients, und versetzen den primären Broker 20 in die Lage, Journal und Daten zur Anfrage eines Teilnehmers an den Backup-Broker 30 zu schicken. Der Backup-Broker 30 kann über seine Transportkomponenten 32 ein Test mit einem Bereitschaftssignal zum primären Broker 20 senden, um zeitnah zu ermitteln, wann der primäre Broker 20 ausfällt (siehe dazu unten mehr).
   Die Transportkomponenten 22 des primären Brokers 20 übergeben die Anfrage nach vollständigem Empfang an die Kernel-Komponenten 21 des Brokers 20 zur Abarbeitung. Während der Abarbeitung werden relevante Informationen im Journal (nicht dargestellt) protokolliert.
(3) Nach vollständiger Abarbeitung wird die Antwort auf die Anfrage des Teilnehmers 70 erzeugt.
(4) Anstatt der Antwort, werden zunächst der oder die Einträge in das Journal und optional weitere Daten zur Anfrage des Teilnehmers 70 an den Backup-Broker 30 gesendet.
(5) Die Transportkomponenten 32 des Backup-Brokers 30 übergeben den / die Journaleintrag / - einträge und die optionalen Daten an die Kernel-Komponenten 31 zur Abarbeitung durch einen Journal-Interpreter, der weiter unten im Detail erläutert wird. Mit der Abarbeitung der Einträge wird der Memory Pool 33 des Backup-Brokers 30 im Wesentlichen in denselben Zustand gebracht wie der Memory Pool 23 des primären Brokers 20
(6) Nach vollständiger Abarbeitung wird ein Quittierungssignal für den primären Broker 20 erzeugt.
(7) Das Quittierungssignal des Backup-Brokers 30 wird an den primären Broker 20 gesendet.
(8) Die im Schritt (3) erzeugte Antwort wird an die Schnittstelle 71 des Teilnehmers 70 gesendet und gegebenenfalls an eine Applikation übergeben.

Sämtliche Anfragen der Teilnehmer, interne Timeouts, und administrative Kommandos verändern den Datenbestand im Memory Pool 23 und möglicherweise auch im nichtflüchtigen Speicher 24 des primären Brokers 20. Alle diese Aktivitäten müssen im primären Broker 20 bezüglich ihrer Relevanz für den Backup-Broker 30 untersucht werden. Sind Aktionen für den Backup-Broker 30 von Bedeutung, werden sie durch die Erstellung eines entsprechenden Eintrags protokolliert. Das dafür zuständige Journal ist ein entsprechender Datenpuffer, der mit den notwendigen Informationen, vorzugsweise in Binärform gefüllt wird. Da diese Informationen alle im primären Broker 20 durchgeführten, für den Memory Pool 23 relevanten Aktionen detailliert beschreiben, befindet sich nach einer Übertragung der Einträge zum Backup-Broker 30 und der weiter unten erläuterten, vereinfachten Abarbeitung der Memory Pool 33 im Wesentlichen im demselben Zustand wie der Memory Pool 23.

Nicht alle Vorgänge im primären Broker 20 führen zu einem Joumaleintrag. Beispielsweise sind für die Erstellung einer Statistik notwendige aktualisierte Zeitstempel von einzelnen Vorgängen nicht notwendigerweise an der Backup-Broker 30 weiterzuleiten, da der Replay-Mechanismus im Backup-Broker diese Aktionen selbstständig beim Abarbeiten der Journaleinträge durchführt. Diverse Zeitstempel müssen also nicht übertragen werden. Ebenso werden beispielsweise interne Default-Werte vorzugsweise selbständig vom Backup-Broker gesetzt und nicht als Journaleinträge übermittelt, da diese Werte in jedem Broker gleicher Version identisch sind.

Informationsanfragen beispielsweise nach der Kernelversion des primären Brokers 20 oder nach der letzten "Unit of Work" eines Participant sind rein informativ und erfordern keinerlei Spiegelung im Backup-Broker 30. Ein RECEIVE, mit dem ein Teilnehmer gegenüber dem primären Broker 20 seine Empfangsbereitschaft für Daten mitteilt, wird vorzugsweise bis zur Erzeugung einer Antwort darauf nicht gespiegelt. Ebenso bleibt bevorzugt die Tatsache, dass ein Teilnehmer im Wartezustand ist, für den Backup-Broker 30 unerheblich. Erst das Zustellen einer RECEIVE Antwort sollte an den Backup-Broker 30 weitergeleitet werden, denn der Request Counter im primären Broker 20 hat sich verändert, bzw. die Anordnung der Nachrichten in einer Conversation kann modifiziert worden sein, wenn beispielsweise die älteste gelesene Nachricht gelöscht worden ist.

Anfragen von Teilnehmern an interne Dienste des Brokers 20 werden nicht protokolliert, es sei denn, sie modifizieren die Datenstruktur des Memory Pools 23 wie z.B. ein SHUTDOWN SERVER, oder ein SUBSCRIBE TOPIC. Ebenso werden beispielsweise alle nicht-konversationalen, nicht-dauerhaft gespeicherten Anfragen herausgefiltert, da eine Applikation im Falle einer Störung des Brokers 20 die Anfrage wiederholen kann. Ausschlaggebend für diese Klassifizierung ist die Tatsache, dass der Aufwand zum Spiegeln dieser Informationen in keinem Verhältnis zum Nutzen für nicht-konversationale Anwendungen steht. Das Gesamtsystem könnte durch eine Spiegelung auch dieser Informationen zu stark belastet werden.

Alle benutzerbezogenen Daten werden im Journal festgehalten. LOGON, LOGOFF und alle Änderungen von Feldern im Participant Control Block (PCB, siehe dazu unten mehr) werden an den Backup-Broker 30 weitergeleitet. Fällt der primäre Broker 20 aus, ist daher der verloren gegangene Benutzerkontext im Backup-Broker 30 vollständig vorhanden.

Komplexer werden die Anforderungen bei einem SEND. Sowohl Journaldaten als auch die gesendete Nachricht selbst werden vorzugsweise vom primären Broker 20 an den Backup-Broker 30 übertragen. In diesem Fall wird die Anfrage eines Teilnehmers im Anschluss an die Journaldaten als eigenständige Einheit weitergeleitet. Analog ist der Ablauf bei der Funktion SEND_PUBLICATION.

Die Intelligenz, zu erkennen, welche Daten im Journal geführt werden müssen, und welche nicht, ist als Filter zu betrachten. Dieser Filter ist im primären Broker 20 aktiv, um irrelevante Operationen z.B. syntaktisch falsch formulierte Anfragen nicht zu berücksichtigen, da dies keine relevante Änderung von Objekten im primären Broker 20, d.h. im Memory Pool 23 oder sogar im dauerhaften Speicher 24 nach sich zieht.

Der Interpreter des Journals im Backup-Broker 30 erzeugt, modifiziert, oder löscht Datenobjekte gemäß den Journaldaten. Der Interpreter ist eine spezielle Komponente eines Brokers, die nur im Backup-Modus aktiv ist. Sie arbeitet single-threaded, um völlig störungsfrei die Daten im Memory Pool 33 des Backup-Brokers 30 zu manipulieren und gegebenenfalls zusätzlich den dauerhaften Speicher 34 anzupassen. Die Aktionsabläufe sind dabei optimiert, wie im folgenden Beispiel näher erläutert wird:

Der primäre Broker 20 erzeugt alle Objekte wie beispielsweise Participant Control Blocks (PCBs) für einen neuen Teilnehmer, Conversation Control Blocks für eine neue Kommunikation, Service Control Blocks etc. zum Zeitpunkt ihrer Initialisierung. Die jeweiligen Kontrollblocktypen werden in Arrays angelegt. Damit ist sichergestellt, dass z.B. alle PCBs im Memory Pool 23 physisch nacheinander liegen. Es ist somit möglich, über einen Index unter Zuhilfenahme der Anfangsadresse des PCB-Arrays jeden PCB-Kontrollblock zu erreichen.

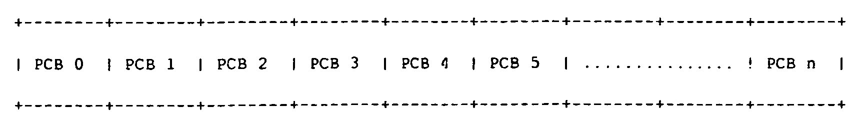

### Beispiel:

Adresse PCB 2 = Anfangsadresse aller PCBs + feste Länge zweier PCB-Kontrollblöcke

Dieses Array wird auf eine Queue abgebildet, die Queue der freien PCBs. Der Anker dieser "free queue" zeigt auf PCB 0, PCB 0 zeigt mit seinem "next pointer" auf PCB 1, der wiederum auf PCB 2 usw. Der letzte PCB enthält als "next pointer" eine 0. Diese "free PCB queue" entspricht zum Zeitpunkt der Initialisierung der physikalischen Anordnung im Memory Pool 23.

Ferner gibt es eine "active PCB queue", die jedoch zum Zeitpunkt der Initialisierung des Brokers 20 noch leer ist. Soll nun für einen neuen Teilnehmer ein PCB erzeugt werden, wird der "free queue" der erste Eintrag entnommen (PCB 0), d.h. der Anker der "free queue" zeigt auf PCB 1, wobei der Rest dieser Queue unverändert bleibt.

Die "active PCB queue" wird um den PCB 0 ergänzt. Da die Queue leer war, ist PCB 0 der einzige Eintrag. Der Anker zeigt auf PCB 0, der "next pointer" in PCB 0 ist auf 0 gesetzt, um zu signalisieren, dass keine weiteren PCBs vorhanden sind. Im Laufe der Verarbeitung werden neue PCBs in die "active queue" gekettet, und beim Löschen eines Teilnehmers auch wieder in die "free queue" überführt. Nach einiger Zeit haben dann die logischen Queues keinerlei Beziehung mehr zum physischen Array. Beispielsweise könnte die "free queue" so aussehen:

Der Anker zeigt auf den PCB 253, dessen "next pointer" zeigt auf PCB 1, dessen "next pointer" wiederum auf PCB 830, usw.. Dies führt dazu, dass der Broker 20, wenn er beispielsweise einen PCB mit der USER-ID "HUGO" suchen muss, er vom Anker der "active queue" ausgehend solange die logische Kette untersucht, bis die USER-ID gefunden wurde, oder das Ende der Kette erreicht wurde. Solche Suchabläufe finden jedoch aufgrund der vereinfachten Abarbeitung der Journaleinträger im Backup-Broker 30 nur im primären Broker 20 statt.

Hat nämlich beispielsweise der PCB mit der USER-ID "HUGO" den Index 2000, dann bedeutet das für den Backup-Broker 30, dass er diesen PCB Index 2000 benutzen kann, ohne suchen zu müssen, denn das Journal teilt dem Backup-Broker mit, den PCB mit diesem Index zu verwenden. Im Ergebnis wird im Backup-Broker 30 jeglicher Aufwand zum Auffinden von Informationen vermieden, da das Journal Direktzugriffe formuliert.

Fällt der primäre Broker 20 aus, sind alle relevanten Verwaltungsobjekte, aber auch die Nutzdaten in Form von Nachrichten, Unis Of Work oder Publications (die in der EP 0 600 235 B1 genauer definiert sind) im Backup-Broker 30 verfügbar. Aufgrund der Synchronisierung über Journaldaten besitzt beispielsweise eine Conversation im primären Broker 20 auch im Backup-Broker 30 die gleiche CONV-ID. Im Ergebnis liegen alle für die Backup-Funktion relevanten Daten als exakte Kopie im Backup-Broker 30 vor.

Die Journaldaten für den kontinuierlichen Datenabgleich haben vorzugsweise folgende Struktur:

| | | |
|---|---|---|
| COMMAND: | ADD_OBJ, UPD_OBJ, DEL_OBJ | |
| OBJECT: | BCT, PCB, PCBEXT, SCB, SCBEXT, CCB, TOQ, ... | |
| OBJECT-INDEX: | Index des Objekts | |
| FIELD-KEY: | Objektspezifische ldentifikationsnummern für Objektdatenfelder; | |
| | Feldformat und Feldlänge ergeben sich implizit aus dem angegebenen Feldschlüssel. | |
| FIELD-FORMAT: | i1\|i2\|i4 | für Integer in Host-Order |
| | s1\|s2\|sn | für nicht-null-terminierte Character-Amays in |
| | lokaler Repräsentation | |
| | x1\|x2\|xn | für hexadezimale Werte |
| FIELD-VALUE: | Wert, der im referenzierten Feld einzutragen ist. | |
| | Datenrepräsentation im Format des Quell-Hosts. | |

Die Felder FIELD-KEY, FIELD-FORMAT und FIELD-VALUE können mehrfach wiederholt werden, bis FIELD-KEY EOD gesetzt ist. Das Kommando DEL-OBJ wird ohne Angabe von FIELD-* Daten benutzt.

Neben dieser deskriptiven Art der Protokollierung von Änderungen sind auch Meta-Objekte gültig, wenn z.B. der Kontext eines Clients erzeugt werden soll, oder eine Conversation einem bestimmten Server zugeordnet wird. Abstraktionen wie Kommando CREATE_CLIENT verkürzen die Menge der Journaldaten, da die notwendigen Aktionen im Zusammenhang mit Meta-Objekten bekannt sind, und nur ergänzende Indizes notwendig sind, um das Replay synchron durchführen zu können.

Zusätzlich zum Datenabgleich über Journaleinträge können auch die dauerhaften Speicher 24 und 34 synchronisiert werden. Ein solcher Datenabgleich kann über die weiter unten erläuterte dynamische Zuschaltung des Backup-Brokers 30 zum primären Broker 30 erzielt werden, erfordert jedoch Aufwand zur Übertragung aller dauerhaft gespeicherten Daten vom primären Broker 20 zum Backup-Broker 30. Da dieser dynamische Abgleich isoliert ablaufen kann, ist das Kopieren bzw. Konvertieren der dauerhaften Speicher auch im Rahmen von Wartungszeiten durchführbar.

Vorzugsweise erhält jede Anfrage eines Teilnehmers beim primären Broker 20 in der Antwort die ID des Backup-Brokers 30. Bei einem Ausfall des primären Brokers 20 kann daher die Anfrage von der Schnittstelle 71 unmittelbar zum Backup-Broker 30 gesendet werden. Sobald der Backup-Broker 30 im Zuge des weiter unten in Detail erläuterten Vorgangs als primärer Broker aktiviert ist, akzeptiert er Anfragen von Teilnehmern und setzt bestehende Konversationen oder Publikationen fort. Die ID für den Broker im API wird entsprechend modifiziert.

Um das Duplizieren einer Anfrage eines Teilnehmers zu vermeiden - der Ausfall des primären Brokers 20 kann vor, während, oder nach der Bearbeitung der Anfrage eingetreten sein -, wird jede Anfrage pro Teilnehmer fortlaufend nummeriert, sodass das doppelte Senden einer Nachricht im Backup-Broker 30 entdeckt und unterbunden werden kann.

Die Übernahme der Funktion als Broker durch den Backup-Broker 30 verläuft wie folgt: Parallel zum oben erläuterten effizienten Abarbeiten der vom primären Broker 20 weitergeleiteten Journaleinträge läuft im Backup-Broker 30 ein Sensor bzw. ein Überwachungsprogramm (nicht dargestellt), so dass bei Überschreitung einer definierbaren Wartezeit (Attribut PRIMARY-BROKER-NONACT) Pings an den primären Broker 20 gesendet werden, um dessen Verfügbarkeit zu testen. Bleibt die Antwort innerhalb der PRIMARY-BROKER-NONACT aus, wird der Backup-Broker 30 aktiviert, d.h. die Zurückweisung der direkten Annahme von normalen Anfragen von Teilnehmern wird abgeschaltet. Ferner wird der Journal-Interpreter gestoppt, und der Normalbetrieb als Broker beginnt. Alle Teilnehmeranfragen mit einer fortlaufenden Nummer, die kleiner oder gleich der bereits verarbeiteten Nummer ist, werden mit einer speziellen Fehlermeldung abgewiesen, um das Erzeugen doppelter Nachrichten oder ähnliche Verdopplungen zu vermeiden.

Die Schnittstelle behandelt das Zurückweisen eines doppelten SEND ohne die Applikation informieren zu müssen. Ein RECEIVE wird nie zurückgewiesen. War die Nachricht bereits zugestellt worden, interpretiert der Backup-Broker die wiederholte Anfrage als RECEIVE LAST.

Fig. 6 zeigt die Schritte bei der Übernahme der Funktion als Broker im Detail:
(1) Die Schnittstelle 71 der Applikation 70 verwendet die ID des primären Brokers 20 für die Adressierung einer Anfrage.
(2) Nach Abarbeitung der Anfrage wird von der Transport-Komponente 22 des primären Brokers 20 die Antwort an die Schnittstelle 71 gesendet. Die Antwort enthält auch die Adresse des verfügbaren Backup-Brokers 30.
(3) Die Verbindung zum primären Broker 20 ist unterbrochen. Der Backup-Broker 30 empfängt keine Journaleinträge mehr. Nach dem Erreichen des Wertes PRIMARY-BROKER-NONACT wird ein Ping vom Backup-Broker 30 an den primären Broker 20 gesendet. Bleibt der Ping für die PRIMARY-BROKER-NONACT Zeit unbeantwortet, leitet der Backup-Broker 30 das Notfallprogramm ein. Dazu führt der Backup-Broker 30 eine Übernahmesequenz durch, die ihn als primären Broker aktiviert. Dies beinhaltet das Akzeptieren aller Verbindungsaufforderungen und das Abarbeiten von Anfragen der Teilnehmer. Wenn zu diesem Zeitpunkt kein weiterer Backup-Broker existiert, unterbleibt jegliche Kontaktaufnahme zur Sicherung der Daten im flüchtigen Speicher 33.
(4) Da der primäre Broker 20 nicht mehr erreichbar ist, tauscht die Schnittstelle 71 die ID für den Broker aus und versucht den Backup-Broker 30 zu kontaktieren. Nach erfolgreicher Übernahme ist der Backup-Broker 30 funktionsbereit, und akzeptiert die Teilnehmer-anfrage.
(5) Nach Abarbeitung der Teilnehmeranfrage wird von der Transport-Komponente 32 des Backup-Broker 30 die Antwort an die Schnittstelle 71 gesendet. Diese Antwort enthält keine Adresse eines neuen Backup-Brokers, es sei denn, zwischenzeitlich erfolgte der weiter unten beschriebene Start eines weiteren Backup-Brokers.

Im Folgenden wird das Hinzufügen eines Backup-Brokers zu einem laufenden primären Broker erläutert. Dieser Vorgang erfolgt beispielsweise, wenn nach einem Ausfall eines primären Brokers in der oben beschriebenen Weise der Backup-Broker die Rolle des primären Brokers übernommen hat und nun zur Aufrechterhaltung der Ausfallsicherheit ein weiterer Backup-Broker hinzugefügt wird, beispielsweise der erneut gestartete ursprünglich primäre Broker oder ein dritter Broker, der als neuer Backup-Broker dienen soll.

Der Vorgang des Dazuschaltens blockiert den bis dahin allein agierenden primären Broker 20 für einen kurzen Zeitraum. Währendessen erfolgt ein Datenaustausch zwischen dem primären Broker 20 und dem Backup-Broker 30. Dazu wird zunächst der dauerhafte Speicher übertragen.

Die Möglichkeit des Übertragens der dauerhaft gespeicherten Daten vom Speicher 24 des primären Brokers 20 zum dauerhaften Speicher 34 des hinzuzufügenden Backup-Brokers 30 erlaubt unabhängig von anderen Vorgängen, Benutzerdaten bequem zu transferieren, wobei es unerheblich ist, ob der Typ des dauerhaften Speichers der Quelle und des Ziels identisch ist oder nicht. Selbst die Betriebssysteme können unterschiedlich sein. Das Protokoll zur Übertragung der dauerhaft zu speichernden Informationen und die Art der Übertragung machen den Transfer völlig flexibel.

Danach erfolgt die Übertragung aller relevanten Daten aus dem Memory Pool 23. Ähnlich wie beim fortlaufenden Journal, werden zu diesem Zweck die Datenbestände im Memory Pool 23 über ein Komplett-Journal an den Backup-Broker 30 gesendet. Ein Komplett-Journal ist deshalb erforderlich, weil der gesamte Memory Pool 23 analysiert und ggf. abgeglichen werden muss. Da diese Vorgänge ein in sich konsistentes System erfordern, darf während der Synchronisierung des primären Brokers 20 mit dem Backup-Broker 30 keine Teilnehmeranfrage bearbeitet werden.

Das Transfer-Prokoll der für die dauerhaft gespeicherten Daten übertragt die Units Of Work unter Zuhilfenahme des Journal-Protokolls:

| | | |
|---|---|---|
| COMMAND: | ADD_OBJ | |
| OBJECT: | UOW | |
| OBJECT-INDEX: | Index des Objekts | |
| FIELD-KEY: | Objektspezifische Identifikationsnummern für Objektdatenfelder; | |
| | Feldformat und Feldlänge ergeben sich implizit aus dem angegebenen Feldschlüssel. | |
| FIELD-FORMAT: | i1\|i2\|i4 | für Integer in Host-Order |
| | s1\|s2\|sn | für nicht-null-terminierte Character-Arrays in lokaler Repräsentation |
| | x1\|x2\|xn | für hexadezimale Werte |
| FIELD-VALUE: | Wert, der im | referenzierten Feld einzutragen ist. |
| | Datenrepräsentation im Format des Quell-Hosts. | |

Die in der UOW abgelegten Nachrichten werden als ein Binärarray übertragen. Die Rekonstruktion von Kontrollinformationen aus dem Binärarray erfolgt auf dem Ziel-Host, um z.B. Encoding-Descriptor oder Nachrichtenlängen in die lokale Repräsentation umzuwandeln.

Abschließend wird noch die Vorgehensweise zum Start und zum Anhalten des Clusterbetriebs des primären Brokers 20 und des Backup-Brokers 30 erläutert. Sollen beide Instanzen des Brokers annähernd zeitgleich aktiviert werden, sind folgende Schritte notwendig:

Der primäre Broker 20 wird mit "RUN-MODE = PRIMARY" gestartet. Zusätzlich wird über "PARTNER = broker_id" die Transportadresse des Backup-Brokers 30 in der Attributdatei definiert. Nach dem Startup des primären Brokers 20 wird versucht, den Partner zu kontaktieren. Solange der Backup-Broker 30 nicht antwortet, ist der primäre Broker 20 für Teilnehmeranfragen nicht verfügbar.

Der Backup-Broker 30 wird mit "RUN-MODE = BACKUP" gestartet. Zusätzlich wird über "PARTNER = broker_id" die Transportadresse des primären Brokers 20 in der Attributdatei definiert. Nach dem Startup des Backup-Brokers 30 wird versucht, den Partner zu kontaktieren. Solange der primäre Broker 20 nicht antwortet, bleibt der Backup-Broker 30 in Wartestellung. Diese Verzögerungen führen jedoch nicht zu einer Übernahme der Rolle des primären Brokers 30.

Nach dem Handshake beider Broker 20, 30 wird ermittelt, ob der Backup-Broker 30 zunächst synchronisiert werden muss, oder ob beide für den Cluster-Betrieb mit Journal basiertem Update bereit sind. Ist eine Synchronisierung erforderlich, sind die oben erläuterten Schritte zu absolvieren, die beim dynamischen Hinzufügen eines Backup-Brokers 30 notwendig sind.

Zum Anhalten der beiden Broker werden bevorzugt die folgenden Sequenzen durchgeführt:
Gemeinsames Stoppen von primärem 20 und Backup-Broker 30
   (Kommando SHUTDOWN_CLUSTER):
   (1) Der PARTNER Broker wird vom bevorstehenden SHUTDOWN in Kenntnis gesetzt.
   (2) Der primäre Broker 20 akzeptiert keine neuen Anfragen mehr.
   (3) Der Backup-Broker 30 arbeitet alle noch ausstehenden Journal-Sätze ab and quittiert.
   (4) Der primäre Broker 20 sendet Antworten für alle noch unbeantworteten Anfragen, bzw. unterbricht blockierende Calls.
   (5) Der primäre Broker 20 und der Backup-Broker 30 synchronisieren den gemeinsamen SHUTDOWN.
   (6) Der primäre Broker 20 und der Backup-Broker 30 stoppen.
Stoppen des primären Brokers 20 (Kommando SHUTDOWN_BROKER):
   (1) Der Backup-Broker 30 wird vom bevorstehenden SHUTDOWN in Kenntnis gesetzt.
   (2) Der primäre Broker 20 akzeptiert keine neuen Teilnehmeranfragen mehr.
   (3) Der Backup-Broker 30 arbeitet alle noch ausstehenden Journal-Sätze ab and quittiert.
   (4) Der primäre Broker 20 sendet Antworten für alle noch unbeantworteten Teilnehmeranfragen, bzw. unterbricht blockierende Calls.
   (5) Der primäre Broker 20 und der Backup-Broker 30 synchronisieren den SHUTDOWN des primären Brokers 20.
   (6) Der primäre Broker 20 stoppt.
   (7) Der Backup-Broker 30 führt die TAKEOVER Sequenz durch, die ihn als primären Broker aktiviert. Dies beinhaltet das Akzeptieren aller Verbindungsaufforderungen und das Abarbeiten von Teilnehmer-anfragen.
   (8) Da zu diesem Zeitpunkt kein Backup-Broker existiert, unterbleibt jegliche Kontaktaufnahme.
Stoppen des Backup-Broker (Kommando SHUTDOWN_BROKER mit Option STOP_CLUSTER_MODE).
   (1) Der primäre Broker 20 wird vom bevorstehenden SHUTDOWN in Kenntnis gesetzt.
   (2) Der primäre Broker 20 stoppt die Übertragung von Journal-Sätzen an den Backup-Broker 30, arbeitet also im Normalbetrieb weiter.
   (3) Der Backup-Broker 30 leitet den SHUTDOWN ein und beendet die Verarbeitung.

## Patentansprüche

1. System zum Verwalten von Kommunikation zwischen zumindest einem Client (10a - d) und zumindest einem Server (12a - d) mit
a. einem primären Broker (20) mit einem ersten flüchtigen Speicher (23), der *ausgebildet ist,* um zumindest eine Anfrage des zumindest einen Clients (10a - d) bei dem zumindest einen Server (12a -d) zu verwalten;
b. einem Backup-Broker (12a - d) mit einem zweiten flüchtigen Speicher (33), der *ausgebildet ist,* um die zumindest eine Anfrage des Clients (10a - d) bei dem Server (12a - d) zu verwalten, wenn der primäre Broker (20) ausgefallen ist,
c. *wobei* der primäre Broker (20) ein Journal mit Einträgen über Vorgänge aufweist, die *geeignet sind,* den Zustand des ersten flüchtigen Speichers (23) *zu* verändern, *und wobei der primäre Broker ausgebildet ist, um* diese Einträge des Journals an den Backup-Broker (30) zu senden, *so dass der Backup-Broker (30) in der Lage ist bei einem Ausfall des primären Brokers unterbrechungsfrei die Bearbeitung aller Anfragen zu übernehmen, **dadurch gekennzeichnet, dass***
*d. der primäre Broker (20) ausgebildet ist, um eine Kommunikation mit dem zumindest einen Client (10a - d) und oder dem zumindest einen Server (12a - d), die zu einem Eintrag in dem Journal führt, erst zu beantworten, nachdem der Backup-Broker (30) den Empfang des entsprechenden Eintrags quittiert hat.*

2. System nach Anspruch 1, wobei der primäre Broker (20) eine Filterfunktion aufweist, die festlegt, welche Einträge in das Journal geschrieben werden.

3. System nach Anspruch 1 oder 2, wobei der Backup-Broker (30) einen Journal-Interpreter aufweist, der die vom primären Broker (20) empfangenen Einträge empfängt und abarbeitet.

4. System nach Anspruch 3, wobei die Abarbeitung der Einträge in dem Journal durch den Journal-Interpreter des Backup-Brokers (30) den zweiten flüchtigen Speicher (33) durch zumindest einen anderen Schritt in *einen* Zustand bringt, *so dass der Backup-Broker (30) in der Lage ist bei einem Ausfall des primären Brokers unterbrechungsfrei die Bearbeitung aller Anfragen zu übernehmen,* als den / die dafür im primären Broker (20) durchgeführten Schritt(e).

5. System nach einem der Ansprüche 1 - 4, wobei der primäre Broker (20) in einer Antwort auf den Empfang einer Kommunikation von einem Client (10a - d) oder einem Server (12a - d) dem Client bzw. dem Server eine Identifizierung des Backup-Brokers (30) mitteilt.

6. System nach Anspruch 5, wobei jede Antwort auf die Anfrage eines Clients (10a - d) die Identifizierung des Backup-Brokers (30) aufweist.

7. System nach einem der Ansprüche 1 - 6, wobei jede Kommunikation mit dem primären Broker (20), die zu einem Eintrag im Journal führt, eindeutig identifiziert wird.

8. System nach Anspruch 7, wobei jede Anfrage eines Teilnehmers an den primären Broker (20), die zu einem Eintrag in das Journal führt, fortlaufend nummeriert wird.

9. System nach einem der Ansprüche 1 - 8, wobei der Backup-Broker (30) ein Testsignal an den primären Broker (20) schickt, wenn er über einen bestimmten Zeitraum hinweg keinen neuen Eintrag empfangen hat.

10. System nach Anspruch 9, wobei der Backup-Broker (30) für die Kommunikation mit dem zumindest einen Client (10a - d) und dem zumindest einen Server (12a - d) empfangsbereit wird, wenn der primäre Broker (20) auf das Testsignal nicht innerhalb einer vorbestimmten Zeit antwortet.

11. System nach einem der Ansprüche 1-10, wobei der Backup-Broker (30) zu dem primären Broker (20) zu einem beliebigen Zeitpunkt zuschaltbar ist, indem alle bis zu diesem Zeitpunkt im Journal gespeicherten Einträge an den Backup-Broker (30) übertragen und dort abgearbeitet werden.

12. System nach Anspruch 11, wobei zusätzlich Daten eines dauerhaften Speichers (24) des primären Brokers (20) an einen dauerhaften Speicher (34) des Backup-Brokers (30) übertragen werden.

13. Computerlesbares Medium mit Anweisungen zur Bereitstellung eines Systems nach einem der Ansprüche 1-12.

14. Programm mit Anweisungen, beim Betrieb auf einem Computer, zu Bereitstellung eines Systems nach einem der Ansprüche 1-13.

## Claims

1. System for managing of communication between at least one client (10a - d) and at least one server (12a - d) comprising:
a. a primary broker (20) with a first volatile memory (23) operable to manage at least one request of the at least one client (10a-d) at the at least one server (12a-d);
b. a back-up broker (12a-d) with a second volatile memory (33) operable to manage the at least one request of the client (10a-d) at the server (12a-d) if the primary broker (20) has failed;
c. wherein the primary broker (20) comprises a journal with entries on actions appropriate to change the state of the first volatile memory (23), the primary broker (20) is operable to send these entries of the journal to the back-up broker (30) so that the back-up broker (30) is able to take over without interruption the processing of all requests at a failure of the primary broker; **characterized in that**
d. the primary broker (20) is operable to answer a communication with the at least one client (10a - d) and / or the at least one server (12a - d) leading to an entry in the journal not until the back-up broker (30) has acknowledged the receipt of the entry.

2. System according to claim 1, wherein the primary broker (20) comprises a filter function which defines which entries are written into the journal.

3. System according to claim 1 or 2, wherein the back-up broker (30) comprises a journal interpreter which receives and processes the entries received from the primary broker (20).

4. System according to claim 3, wherein the processing of the entries within the journal by the journal interpreter of the back-up broker (30) brings the second volatile memory (33) by at least a another step different than the step(s) executed within the primary broker (20) into a state so that the back-up broker (30) is able to process without interruption all entries at a failure of the primary broker.

5. System according to one of the claims 1 - 4, wherein the primary broker (20) informs the client, respectively the server, of an identification of the back-up broker (30) in response to the receipt of a communication from a client (10a - d) or a server (12a - d).

6. System according to claim 5, wherein each answer to the request of a client (10a-d) comprises the identification of the back-up broker (30).

7. System according to one of the claims 1 - 6, wherein each communication with the primary broker (20) which leads to an entry in the journal is unambiguously identified.

8. System according to claim 7, wherein each request of a participant to the primary broker (20), which leads to an entry in the journal is consecutively numbered.

9. System according to one of the claims 1-8, wherein the back-up broker (30) sends a test signal to the primary broker (20), if it does not receive a new entry within a particular period of time.

10. System according to claim 9, wherein the back-up broker (30) for the communication with the at least one client (10a - d) and the at least one server (12a - d) is ready to receive, when the primary broker (20) does not respond to the test signal within a predetermined time.

11. System according to one of the claims 1 - 10, wherein the back-up broker (30) can be added to the primary broker (20) at an arbitrary moment, in that all entries stored until this moment in the journal are transmitted to the back-up broker (30) and are processed there.

12. System according to claim 11, wherein additionally data of a non-volatile memory (24) of the primary broker (20) is transmitted to a non-volatile memory (34) of the back-up broker (30).

13. Computer-readable medium with instructions for providing a system according to one of the claims 1-12.

14. Program with instructions at operation on a computer for providing a system according to one of the claims 1 - 13.

## Revendications

1. Système de gestion de la communication entre au moins un client (10a à 10d) et au moins un serveur (12a à 12 d), comprenant :
a. un courtier primaire (20) avec une première mémoire volatile (23), conçu pour gérer au moins une demande dudit au moins un client (10a à 10d) auprès dudit au moins un serveur (12a à 12d) ;
b. un courtier de secours (12a à 12d) avec une deuxième mémoire volatile (33), conçu pour gérer ladite au moins une demande du client (10a à 10d) auprès dudit au moins un serveur (12a à 12d) en cas de défaillance du courtier primaire (20) ;
c. dans lequel le courtier primaire (20) tient un journal avec des rubriques des opérations aptes à modifier l'état de la première mémoire volatile (23), et dans lequel le courtier primaire est conçu pour envoyer ces rubriques du journal au courtier de secours (30), de façon que le courtier de secours (30) soit en mesure, en cas de défaillance du courtier primaire, de prendre en charge sans interruption le traitement de toutes les demandes, **caractérisé en ce que**
d. le courtier primaire (20) est conçu pour ne répondre à une communication avec ledit au moins client (10a à 10d) et/ou avec ledit au moins un serveur (12a à 12d) débouchant sur l'inscription d'une rubrique dans le journal que lorsque le courtier de secours (30) a accusé réception de la rubrique correspondante.

2. Système selon la revendication 1, dans lequel le courtier primaire (20) possède une fonction de filtrage qui définit les rubriques inscrites dans le journal.

3. Système selon la revendication 1 ou 2, dans lequel le courtier de secours (30) possède un interpréteur de journal qui reçoit et traite les rubriques reçues du courtier primaire (20).

4. Système selon la revendication 3, dans lequel le traitement des rubriques du journal par l'interpréteur de journal du courtier de secours (30) place la deuxième mémoire volatile (33), par l'intermédiaire d'au moins une autre étape, dans un état tel que le courtier de secours (30) est en mesure, en cas de défaillance du courtier primaire, de prendre en charge sans interruption le traitement de toutes les demandes sous la forme de la ou des étapes prévues à cet effet dans le courtier primaire (20).

5. Système selon l'une des revendications 1 à 4, dans lequel, en réponse à la réception d'une communication d'un client (10a à 10d) ou d'un serveur (12a à 12d), le courtier primaire (20) communique au client, respectivement au serveur une identification du courtier de secours (30).

6. Système selon la revendication 5, dans lequel toute réponse à une demande d'un client (10a à 10d) contient l'identification du courtier de secours (30).

7. Système selon l'une des revendications 1 à 6, dans lequel toute communication avec le courtier primaire (20) entraînant une inscription dans le journal est identifiée de manière univoque.

8. Système selon la revendication 7, dans lequel les demandes d'un participant au courtier primaire (20) entraînant une inscription d'une rubrique dans le journal sont numérotées en continu.

9. Système selon l'une des revendications 1 à 8, dans lequel le courtier de secours (30) envoie un signal d'essai au courtier primaire (20) lorsque, au-delà d'un laps de temps défini, il n'a pas reçu de nouvelle rubrique.

10. Système selon la revendication 9, dans lequel, pour communiquer avec ledit au moins un client (10a à 10d) et avec ledit au moins un serveur (12a à 12d), le courtier de secours (30) est placé en état de réception lorsque le courtier primaire (20) ne répond pas au signal d'essai dans un délai prédéterminé.

11. Système selon l'une des revendications 1 à 10, dans lequel le courtier de secours (30) peut à tout moment devenir le courtier primaire (20) en transmettant au courtier de secours (30) toutes les rubriques inscrites jusque-là dans le journal et en les y traitant.

12. Système selon la revendication 11, dans lequel des données d'une mémoire non volatile (24) du courtier primaire (20) sont transmises, en plus, à une mémoire non volatile (34) du courtier de secours (30).

13. Support lisible par ordinateur, avec des instructions pour la fourniture d'un système selon l'une des revendications 1 à 12.

14. Programme avec des instructions qui, exécutées sur un ordinateur, sont destinées à fournir un système selon l'une des revendications 1 à 13.
